# EUROPEAN PATENT SPECIFICATION

(11) **EP 1 701 207 B1**
(45) Date of publication and mention of the grant of the patent: **16.04.2008**
(21) Application number: 06110450.1
(22) Date of filing: 27.02.2006
(51) Int. Cl.: G03B 21/00

(54) **Projection apparatus including focus regulator**
Projektionsapparat mit Fokusregelung
Appareil de projection comprenant un regulateur de focalisation

(30) Priority: 09.03.2005 KR 2005019666
(43) Date of publication of application: 13.09.2006
(73) Proprietor: Samsung Electronics Co., Ltd., Suwon-si 442-742 Gyeonggi-do (KR)
(72) Inventor: Kim, Min-chul, Gyeonggi-Do (KR)
(74) Representative: Read, Matthew Charles

(56) References cited:
- US-A- 5 587 843
- US-A1- 2002 154 276

## Description

The present invention relates to a focus regulator of a projection apparatus.

A projection apparatus is a display device designed for enlarging and projecting an optical image generated by an image formation unit onto a projection surface, such as a screen. Generally, such a projection apparatus includes an illuminating system for generating light, an image formation unit for converting the light generated by the illuminating system into an optical image and a projection system for enlarging and projecting the optical image onto a projection surface. In addition, the projection system includes a first lens unit and a second lens unit, for focusing and projecting the optical image onto the projection surface.

The projection apparatus also includes a focus regulator for adjusting the focus of the optical image enlarged and projected onto the projection surface. The focus regulator adjusts the focus of the optical image by changing the spacing between the first and second lens units. A conventional focus regulator includes a controller, which protrudes outside of a main body of the projection apparatus to facilitate control by a user, and a power transmission unit for transmitting power from the controller to the first lens unit. A user can operate the focus regulator by rotating the controller. The rotation of the controller is transmitted by the power transmission unit and causes movement of the first lens unit along the optical axis of the optical image. The movement of the first lens changes the spacing between the first and second lens units, thereby adjusting the focus of the projected image.

In such an arrangement, the controller moves with the first lens unit, in the direction of the optical axis. Consequently, the projection apparatus must include sufficient additional space to accommodate the movement of the controller. The provision of such additional space is particularly problematical where the controller protrudes outside of the main body of the projection apparatus. Furthermore, the requirement for additional space hinders minimisation of the size of the projection apparatus. As the demand for portable projection apparatuses increases, the development a focus regulator having a simple structure that facilitates minimisation of the size of the apparatus becomes desirable.

Furthermore, the projection apparatus may include a mask that, when installed on the projection apparatus, covers the front of the main body for design and aesthetic considerations. However, the mask must not restrict the movement of the controller of the focus regulator and so the design of such a mask is not straightforward.

In US 5,587,843, a zoom lens mechanism is disclosed in which a focusing ring is attached to a fixed barrel by means of a pin and slot arrangement. When the focusing ring is rotated in order to adjust the zoom, its linear movement is restricted by the width of the slot.

In another prior arrangement, disclosed in US 2002/0154276 A1, a zoom ring is mounted on a fixing frame. An arrangement of driving pins and cam grooves is provided that prevent movement of the zoom ring along the optical axis.

An object of the present invention is the provision of a focus regulator that permits the size of a projection apparatus comprising the focus regulator to be of reduced size when compared with prior projection apparatuses.

Another object of the present invention is the provision of a focus regulator having a relatively simple configuration and a projection apparatus having the same.

According to the present invention, a projection apparatus, comprises a main body, an illuminating system configured to generate light, an image formation unit arranged to convert the light emitted by the illuminating system into an optical image and a focus regulator, the focus regulator comprising a controller rotatably mounted on a main body, a frame and a focus lens unit attached to the frame and arranged to move in the direction of an optical axis by being rotated with the controller, wherein the main body includes a base that supports the frame, a cover formed on the base and having an opening for receiving a first end of the controller and a mask formed on the cover configured to cover a side of the cover in which the cover opening is formed, having a mask opening arranged to receive a second end of the controller, so that the cover and the mask are arranged to prevent movement of the controller in a direction of the optical axis.

The controller may include a ring-shaped body having an inner portion, in which one end of the focus lens unit is inserted, and at least one power transmission rib, which is elongate and protrudes from the ring-shaped body in the direction of the focus lens unit. Additionally, the focus lens unit may include a focus ring attached to the power transmission rib in a manner that permits the transmission of the rotary power. A focus lens barrel may be provided, having at least one lens therein, for connection to the focus ring. Additionally, a plurality of protrusions may be formed at regular intervals on the outer circumference of the focus ring and the power transmission rib inserted between the protrusions. With this configuration, the controller is connected to the focus lens unit.

The focus lens unit may be affixed to the projection lens unit using screws.

The main body has a base to support the projection lens unit, a cover installed on the base that has an opening for receiving one end of the controller and a mask installed on the cover to cover an opening-sided surface of the cover, that has an opening for receiving the other end of the controller. The movement of the controller in the direction of the optical axis thus may be restricted or prevented by means of the cover and the mask.

An embodiment of the invention will now be described, by way of example, with reference to the accompanying drawings, in which:
Figure 1 is an exploded perspective view of a projection apparatus according to an embodiment of the present invention;
Figure 2 is a schematic diagram showing the operation of the projection apparatus of Figure 1;
Figure 3 is a further exploded perspective view of the projection apparatus of Figure 1; and
Figures 4A and 4B are elevational views in cross section along line IV-IV of Figure 3, illustrating the operation of the projection apparatus of Figure 1.

Throughout the detailed description and drawings, like reference numerals will be understood to refer to like parts, components and structures.

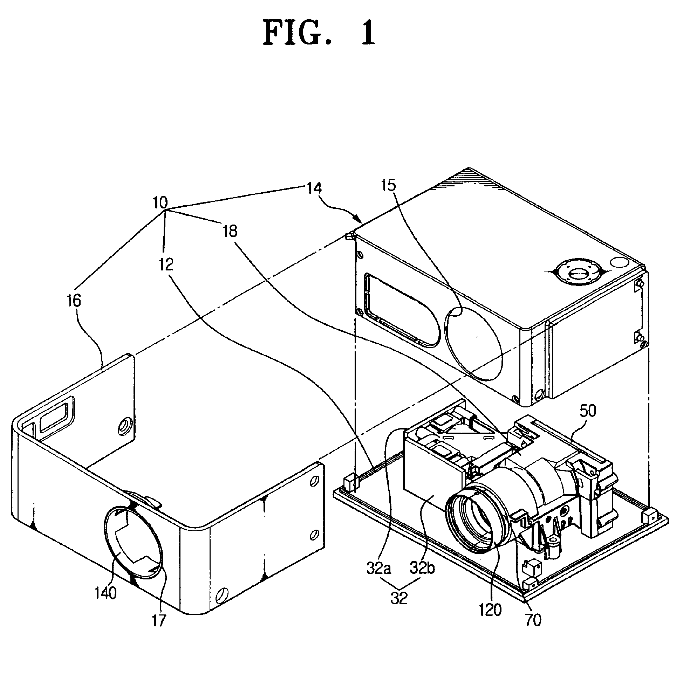

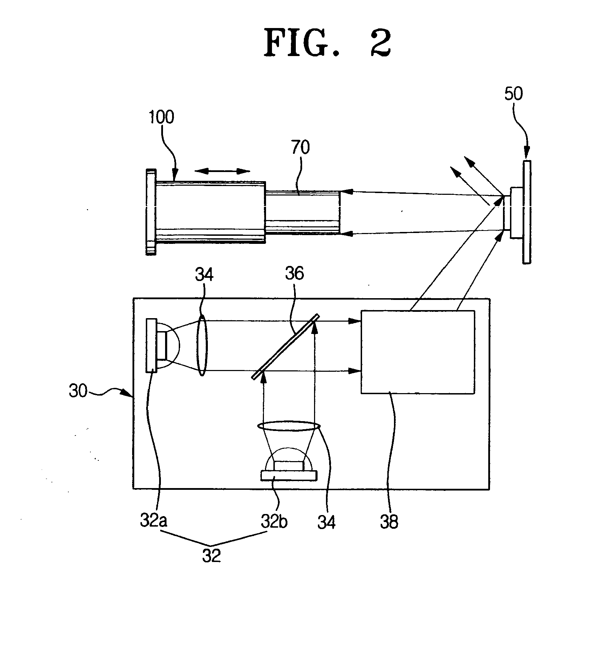

Referring to Figures 1 and 2, a projection apparatus according to an embodiment of the present invention includes a main body 10, an illuminating optical system 30, an image formation unit 50, a projection lens unit 70, and a focus regulator 100.

The main body 10 includes a base 12, a cover 14, a mask 16, and a case 18.

The base 12 forms the bottom plane of the projection apparatus and supports the illuminating optical system 30, image formation unit 50, projection lens unit 70 and focus regulator 100.

The cover 14 is fixed to the base 12. An opening 15 is formed in the front of the cover 14 through which the focus regulator 100 can pass when it advances to adjust the focus.

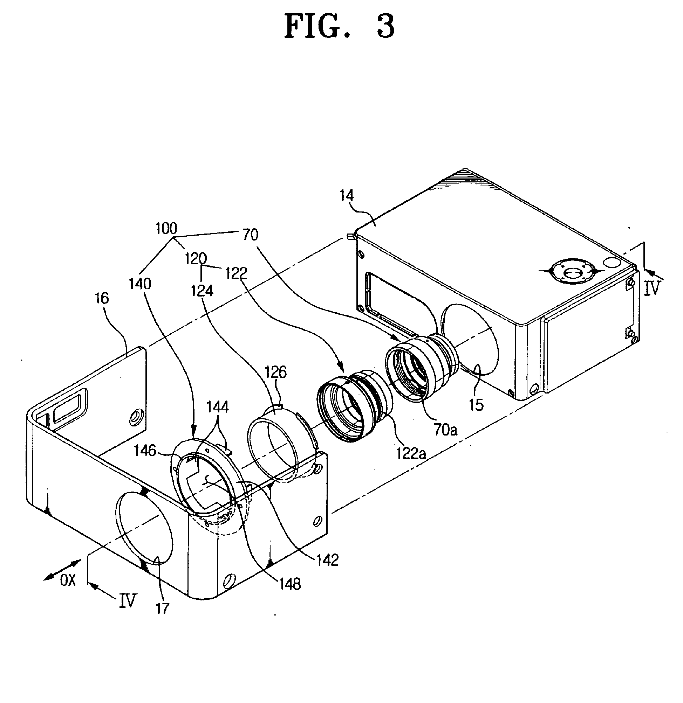

The mask 16 can be fixed using screws or the like at both sides of the cover 14, to cover both sides and the front of the cover 14. An opening 17 is formed at the front of the mask, corresponding to the opening 15 in the cover 14. The focus regulator 100 can pass through the opening 17 when it advances during focus adjustment. As illustrated in Figure 3, a controller 140 of the focus regulator 100 is rotatably mounted and located between the mask 16 and the cover 14. Details of the focus regulator 100 are described below.

The case 18 houses the above parts and is fixed to the base 12, for example, using screws or the like. The case 18 forms a module for the parts and may be omitted when each part is fixed to the base 12.

The illuminating optical system 30 includes a light source 32, a collimating lens 34, a dichroic filter 36 and a relay lens unit 38.

The light source 32 includes a first light source 32a for generating blue and red light, and a second light source 32b for generating green light. In this particular embodiment, both the first and second light sources 32a and 32b are light emitting diode (LED) devices, in order to allow minimisation of the projection apparatus. In other embodiments, a halogen lamp, an ultra-high performance (UHP) lamp or the like may be used as the first and/or second light sources 32a, 32b.

The collimating lens 34 collimates the light emitted from the first and second light sources 32a and 32b, as shown in Figure 2.

The light is transmitted or reflected by means of the dichroic filter 36 according to its wavelength. In this particular example, the dichroic filter 36 transmits red and blue light and reflects green light. Therefore, light emitted from the first light source 32a is transmitted and is then incident on the relay lens unit 38. Additionally, light projected from the second light source 32b is reflected and is then incident on the relay lens unit 38.

The relay lens unit 38 standardises the intensity of the light emerging from the dichroic filter 36 and collects the light to produce a uniform light distribution having a rectangular shape for reception by the image formation unit 50.

The image formation unit 50 converts incident light received from the relay lens unit 38 into an image in accordance with an image signal. The image formation unit 50 may be a CRT (Cathode Ray Tube), LCD (Liquid Crystal Display), DMD (Digital Micromirror Device) or the like.

In this particular example, the image formation unit 50 is a DMD. The DMD consists of a plurality of independently rotatable mirrors that selectively reflect light received from the relay lens unit 38 towards the projection lens unit 70, thereby forming an image.

The projection lens unit 70 is mounted inside the case 18 and receives the optical image generated by the image formation unit 50. A plurality of lenses are arranged inside the projection lens unit 70, to enlarge the optical image and to compensate for various aberrations in the optical image. A screw thread 70a, shown in Figure 3, is formed inside the projection lens unit 70.

Referring to Figure 3, the focus regulator 100 includes a focus lens unit 120 and a controller 140.

The focus lens unit 120 includes a focus lens barrel 122 and a focus ring 124.

A screw thread 122a corresponding to the screw thread 70a of the projection lens unit 70 is formed on the outer circumference of the focus lens barrel 122. The focus lens barrel 122 is inserted into the projection lens unit 70 and fixed therein using the screw threads 70a and 122a. Therefore, when the focus lens barrel 122 rotates, it moves linearly from the projection lens unit 70 along the optical axis (OX). In other embodiments of the invention, the screw threads 70a, 122a may be replaced by other connection means, such as a cam protrusion or a cam groove, that allow the rotation of the focus lens barrel 122 to result in movement along the optical axis OX of the optical image. At least one lens is arranged inside the focus lens barrel 122, and the focus of the image projected onto a projection surface may be adjusted by changing the distance between the lens in the focus lens barrel 122 and the lens in the projection lens unit 70.

A portion of the focus lens barrel 122 is inserted into the focus ring 124, and the focus ring 124 is fixed to the focus lens barrel 122 by securing the inserted portion of the focus lens barrel 122 using screws or the like. In addition, at least one protrusion 126 is formed on the focus ring 124.

The controller 140 includes a ring-shaped body 142, at least one power transmission rib 144 protruding from the body 142 in the direction of the focus ring 124, and a ring-shaped supporting rib 146 formed on the ring-shaped body 142 and protruding from the body in the direction of the mask in a direction substantially opposite to the direction in which the at least one power transmission rib 144 protrudes.

The ring-shaped body 142 has a small diameter opening 148 in a central portion. The focus ring 124 moves linearly in the direction of the optical axis by passing through the opening 148 in the focus ring 124.

The power transmission rib 144 is inserted between the protrusions 126. Therefore, if the controller 140 is rotated, rotary power is transmitted to the focus ring 124 via the power transmission rib 144 and the protrusions 126. Furthermore, by rotating the focus ring 124, the focus lens barrel 122 is caused to move linearly, towards or away from the projection lens unit 70, in the direction of the optical axis. However, the movement of the controller 140 in the direction of the optical axis is prevented due to its placement between the cover 14 and the mask 16. Thus, the focus ring 124 slides in the opening 148 of the controller 140, to the inside of the power transmission rib 144, in the direction of the optical axis. Likewise, the rotary power may be transmitted to the focus lens unit 120 by the simple structure of the power transmission rib 144 and the protrusions 126.

This configuration has the benefit of reducing the overall size of the projection apparatus. In particular, because the focus ring 124 slides on the controller 140 while being inserted between the power transmission rib 144 and the protrusions 126, the controller 140 receives little or no force in the direction of the optical axis, and is prevented from moving along the optical axis due to the presence of the cover 14 and the mask 16. Therefore, additional space for the movement of the controller 144 is not necessary.

In embodiments where the protrusions 126 are provided on the focus lens barrel 122, the focus ring 124 may be omitted.

In the projection apparatus of Figures 1 to 3, the cover 14 and the mask 16 prevent movement of the controller 140 in the direction of the optical axis.

In the projection apparatus of Figures 1 to 3, the projection lens unit 70 comprises a frame that is attached to the focus lens barrel 122 using screws. In an alternative embodiment, the frame may be formed as a separate part affixed to the main body 10. The movement of the controller 140 along the optical axis may be prevented through the provision of a groove on the frame and elongating the power transmission rib 144 relative to the frame, so that it extends into the groove.

The supporting rib 146 is inserted in the opening 17 of the mask 16, and is rotatable.

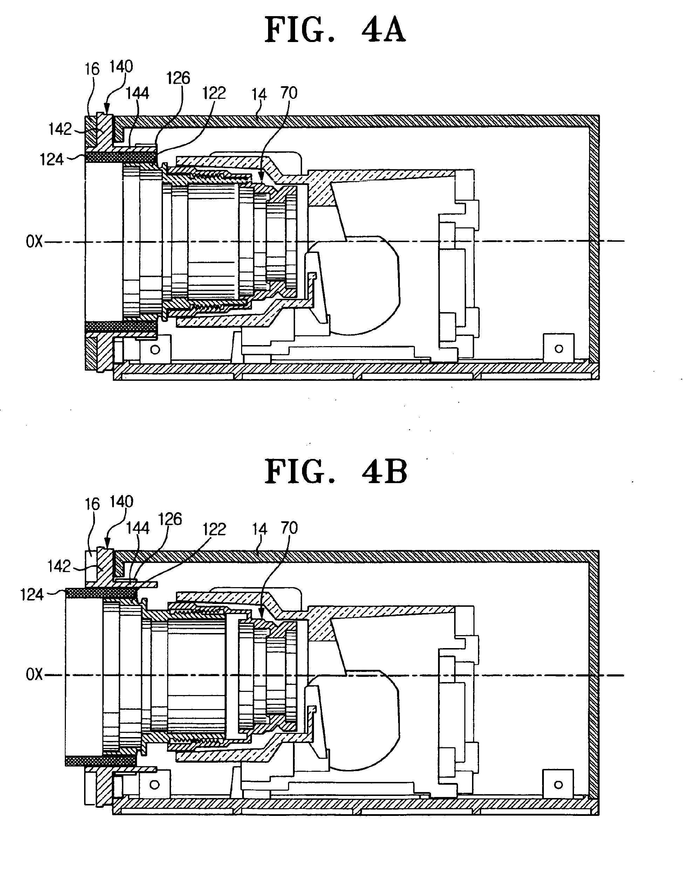

The operation of the projection apparatus of Figure 1 to 3 will now be described, with reference to Figures 4A and 4B.

Firstly, light generated by the illuminating optical system 30, shown in Figure 2, is converted to an optical image by the image formation unit 50. The optical image passes through the projection lens unit 70 and the focus regulator 100 and is projected onto a screen, not shown. A user can use the controller 140 to focus the image projected onto the screen.

The user can adjust the focus by rotating the controller 140, which protrudes from the cover 14 and the mask 16. The power transmission rib 144 of the controller 140 transmits the rotation to the protrusions 126 of the focus ring 124 and rotates the focus ring 124. Furthermore, when the focus ring 124 rotates, the focus lens barrel 122 fixed to the focus ring 124 also rotates. The focus lens barrel 122, which may be attached to the projection lens unit 70 using screws, moves linearly, relative to the projection lens unit 70, along the optical axis (OX).

Because movement of the controller 140 in the direction of the optical axis (OX) is prevented by the mask 16 and the cover 14, the focus ring 124 moves in the direction of the optical axis by sliding along, to the inside of, the power transmission rib 144.

A reduction in the size of the projection apparatus is made possible due to the restriction of movement of the controller 140 in the direction of the optical axis (OX). Moreover, design restrictions are eased without limiting the shape of the mask 16.

The focus lens barrel 122 and the focus ring 124 pass through the opening 148 of the controller 140, shown in Figure 3, and hole 15, 17 of the cover 14 and the mask 16, shown in Figure 3, when they move linearly.

In the embodiment described above, the power transmission structure between the controller and the focus lens unit is simplified, when compared with the prior art, which is advantageous in reducing the size of the projection apparatus.

In particular, the focus lens unit moves in the direction of the optical axis (OX) without movement of the controller in the direction of the optical axis (OX), which is advantageous as it permits a reduction in, or even minimisation of, the size of the projection apparatus. Additionally, design restrictions may be eased compared with the prior art because the design and mounting of an accessory, such as the mask, may be less complicated.

## Claims

1. A projection apparatus, comprising:
a main body (10);
an illuminating system configured to generate light;
an image formation unit arranged to convert the light emitted by the illuminating system into an optical image; and
a focus regulator (100), comprising:
a controller (140) rotatably mounted on a main body (10);
a frame (70); and
a focus lens unit (120) attached to the frame (70) and arranged to move in the direction of an optical axis (OX) by being rotated with the controller (140);
wherein
the main body includes a base (12) that supports the frame (70), a cover (14) formed on the base (12) and having an opening (15) for receiving a first end of the controller (140); **characterized in that** the main body includes a mask (16) formed on the cover (14) configured to cover a side of the cover (14) in which the cover opening (15) is formed, having a mask opening (17) arranged to receive a second end of the controller (140), so that the cover (14) and mask (16) are arranged to prevent movement of the controller (140) in a direction of the optical axis (OX)

2. A projection apparatus as claimed in claim 1, wherein the controller (140) includes an annular body (142) into which one end of the focus lens unit (120) is inserted.

3. A projection apparatus as claimed in claim 2, wherein the controller (140) includes at least one power transmission rib (144) extending from the controller (140) toward the focus lens unit (120).

4. A projection apparatus as claimed in claim 3, wherein the focus lens unit (120) includes a focus ring (124) arranged to engage the power transmission rib (144) to transmit rotary power therebetween.

5. A projection apparatus as claimed in claim 4, wherein the focus lens unit (120) includes a focus lens barrel (122) secured to the focus ring (124) and having at least one internally mounted lens.

6. A Projection apparatus as claimed in claim 5, wherein a plurality of protrusions (126) are formed on an outer circumference of the focus ring (124), arranged so that the power transmission rib (144) is insertable between adjacent ones of said protrusions (126).

7. A projection apparatus as claimed in claim 1, wherein the focus lens unit (120) is attached to the projection lens unit (70) by screws.

8. The projection apparatus as claimed in claim 1, wherein the frame (70) is affixed to the focus lens unit (120) with screws.

9. The projection apparatus as claimed in any of the preceding claims, wherein the frame is a projection lens unit (70).

## Patentansprüche

1. Projektionsvorrichtung, die Folgendes umfasst:
einen Hauptkörper (10);
ein Beleuchtungssystem, das dafür konfiguriert ist, Licht zu erzeugen;
eine Bilderzeugungseinheit, die dafür ausgelegt ist, das von dem Beleuchtungssystem abgegebene Licht in ein optisches Bild umzuwandeln; und
einen Fokusregler (100), der Folgendes umfasst:
eine Steuereinheit (140), die drehbar an dem Hauptkörper (10) montiert ist;
einen Rahmen (70); und
eine Fokuslinseneinheit (120), die an dem Rahmen (70) angebracht ist und dafür ausgelegt ist, sich in die Richtung einer optischen Achse (OX) zu bewegen, indem sie mit der Steuereinheit (140) gedreht wird;
wobei
der Hauptkörper eine Basis (12), die den Rahmen (70) stützt, und eine Abdeckung (14), die an der Basis (12) ausgebildet ist und eine Öffnung (15) aufweist, um ein erstes Ende der Steuereinheit (140) aufzunehmen, enthält; **dadurch gekennzeichnet, dass** der Hauptkörper eine Maske (16) enthält, die an der Abdeckung (14) ausgebildet ist und dafür konfiguriert ist, eine Seite der Abdeckung (14), in der die Abdeckungsöffnung (15) ausgebildet ist, abzudecken, mit einer Maskenöffnung (17), die dafür ausgelegt ist, ein zweites Ende der Steuereinheit (140) aufzunehmen, so dass die Abdeckung (14) und die Maske (16) dafür geeignet sind, eine Bewegung der Steuereinheit (140) in einer Richtung der optischen Achse (OX) zu verhindern.

2. Projektionsvorrichtung nach Anspruch 1, wobei die Steuereinheit (140) einen ringförmigen Körper (142) enthält, in den ein Ende der Fokuslinseneinheit (120) eingesetzt ist.

3. Projektionsvorrichtung nach Anspruch 2, wobei die Steuereinheit (140) mindestens eine Kraftübertragungsrippe (144) enthält, die sich von der Steuereinheit (140) in Richtung der Fokuslinseneinheit (120) erstreckt.

4. Projektionsvorrichtung nach Anspruch 3, wobei die Fokuslinseneinheit (120) einen Fokusring (124) enthält, der dafür ausgelegt ist, die Kraftübertragungsrippe (144) in Eingriff zu nehmen, um zwischen ihnen eine Drehkraft zu übertragen.

5. Projektionsvorrichtung nach Anspruch 4, wobei die Fokuslinseneinheit (120) eine Fokuslinsenfassung (122) enthält, die an dem Fokusring (124) befestigt ist und mindestens eine innen montierte Linse aufweist.

6. Projektionsvorrichtung nach Anspruch 5, wobei mehrere Vorsprünge (126) an einem Außenumfang des Fokusrings (124) ausgebildet sind, die so angeordnet sind, dass die Kraftübertragungsrippe (144) zwischen benachbarte der Vorsprünge (126) eingeführt werden kann.

7. Projektionsvorrichtung nach Anspruch 1, wobei die Fokuslinseneinheit (120) an der Projektionslinseneinheit (70) mit Hilfe von Schrauben befestigt ist.

8. Projektionsvorrichtung nach Anspruch 1, wobei der Rahmen (70) an der Fokuslinseneinheit (120) mit Hilfe von Schrauben befestigt ist.

9. Projektionsvorrichtung nach einem der vorangehenden Ansprüche, wobei der Rahmen eine Projektionslinseneinheit (70) ist.

## Revendications

1. Appareil de projection, comportant :
un corps principal (10) ;
un système d'illumination configuré pour générer de la lumière ;
une unité de formation d'image agencée pour convertir la lumière émise par le système d'illumination en une image optique ; et
un régulateur (100) de mise au point, comportant :
une unité de commande (140) montée de façon à pouvoir tourner sur le corps principal (10) ;
un bâti (70) ; et
une unité (120) à lentille de mise au point montée sur le bâti (70) et agencée pour se déplacer dans la direction d'un axe optique (OX) en étant tournée à l'aide de l'unité de commande (140) ;
dans lequel
le corps principal comporte une base (12) qui supporte le bâti (70), un capot (14) formé sur la base (12) et ayant une ouverture (15) pour recevoir une première extrémité de l'unité de commande (140) ; **caractérisé en ce que** le corps principal comprend un masque (16) formé sur le capot (14), configuré pour recouvrir un côté du capot (14) dans lequel l'ouverture (15) du capot est formée, ayant une ouverture (17) de masque agencée pour recevoir une seconde extrémité de l'unité de commande (140), de manière que le capot (14) et le masque (16) soient agencés pour empêcher tout mouvement de l'unité de commande (140) dans une direction de l'axe optique (OX).

2. Appareil de projection selon la revendication 1, dans lequel l'unité de commande (140) comprend un corps annulaire (142) dans lequel est introduite une extrémité de l'unité (120) à lentille de mise au point.

3. Appareil de projection selon la revendication 2, dans lequel l'unité de commande (140) comporte au moins une languette (144) de transmission de force s'étendant depuis l'unité de commande (140) vers l'unité (120) à lentille de mise au point.

4. Appareil de projection selon la revendication 3, dans lequel l'unité (120) à lentille de mise au point comprend une bague (124) de mise au point agencée de façon à engager la languette (144) de transmission de force pour transmettre une force de rotation entre elles.

5. Appareil de projection selon la revendication 4, dans lequel l'unité (120) à lentille de mise au point comprend un barillet (122) à lentille de mise au point fixé à la bague (124) de mise au point et ayant au moins une lentille montée intérieurement.

6. Appareil de projection selon la revendication 5, dans lequel de multiples saillies (126) sont formées sur une circonférence extérieure de la bague (124) de mise au point, agencées de façon que la languette (144) de transmission de force puisse être insérée entre certaines, adjacentes, desdites saillies (126).

7. Appareil de projection selon la revendication 1, dans lequel l'unité (120) à lentille de mise au point est montée à l'aide de vis sur l'unité (70) à lentille de projection.

8. Appareil de projection selon la revendication 1, dans lequel le bâti (70) est fixé à l'unité (120) à lentille de mise au point à l'aide de vis.

9. Appareil de projection selon l'une quelconque des revendications précédentes, dans lequel le bâti est une unité (70) à lentille de projection.
